# EUROPÄISCHE PATENTSCHRIFT

(11) **EP 2 498 980 B1**
(45) Veröffentlichungstag und Bekanntmachung des Hinweises auf die Patenterteilung: **05.10.2016**
(21) Anmeldenummer: 10781436.0
(22) Anmeldetag: 12.11.2010
(51) Int. Cl.: B29C 70/46, B29C 70/50, B29C 70/54, B29B 15/08, B29C 31/04

(54) **ANLAGE ZUR HERSTELLUNG VON FASERVERSTÄRKTEN FORMTEILEN UND VERFAHREN ZUM BETREIBEN EINER ANLAGE ZUR HERSTELLUNG VON FASERVERSTÄRKTEN FORMTEILEN**
SYSTEM FOR PRODUCING FIBER-REINFORCED MOLDED PARTS AND METHOD FOR OPERATING A SYSTEM FOR PRODUCING FIBER-REINFORCED MOLDED PARTS
INSTALLATION DE PRODUCTION DE PIÈCES MOULÉES EN FEUILLE ET PROCÉDÉ POUR FAIRE FONCTIONNER UNE INSTALLATION DE PRODUCTION DE PIÈCES MOULÉES EN FEUILLE

(30) Priorität: 12.11.2009 DE 102009046670
(43) Veröffentlichungstag der Anmeldung: 19.09.2012
(73) Patentinhaber: Dieffenbacher GmbH Maschinen- und Anlagenbau, 75031 Eppingen (DE)
(72) Erfinder: GRAF, Matthias, 75015 Bretten (DE)
(86) Internationale Anmeldenummer: PCT/EP2010/006918
(87) Internationale Veröffentlichungsnummer: WO 2011/057807

(56) Entgegenhaltungen:
- EP-A1- 1 386 721
- WO-A1-90/06226
- FR-A- 1 324 495
- JP-A- 4 135 704

## Beschreibung

Die Erfindung betrifft eine Anlage zur Herstellung von faserverstärkten Formteilen (SMC) nach dem Oberbegriff des Patentanspruchs 1 und betrifft weiter ein Verfahren zum Betreiben einer Anlage zur Herstellung von faserverstärkten Formteilen (SMC) nach dem Oberbegriff des Patentanspruchs 11.

Eine gattungsbildende Anlage ist beispielsweise in der WO 90/06226 A1 offenbart.

Wegen ihren guten mechanischen Eigenschaften und des günstigen Preises sind solche nach dem SMC-Verfahren hergestellten Formteile die am meisten eingesetzten duroplastischen Faserverbundkunststoffe.
Bisher wird zur Herstellung von SMC-Teilen zuerst der Rohstoff, bestehend aus einer Harzmasse (Harzansatz) mit eingelagerten geschnittenen Glasfasern, hergestellt. Dieser Harzansatz wird auf dünnen durchsichtigen Kunststofffolien (Trägerfolien) abgelegt und einem Reifeprozess unterzogen. Der derzeitige Reifeprozess liegt bei 4-5 Tagen und dient dem Eindicken der im Harzansatz eingemischten Füllstoffe. Der Harzansatz besteht aus Harzen, Thermoplastlösungen, Füllstoffen, Fließverbesserer, integrierte Trennmittel, Inhibitoren und Härter. Dieser wird zu einer gut dispergierten Flüssigkeit auf vorgegebene Temperatur gerührt und an der Harzmattenanlage noch mit einem Eindickmittel, pulverförmig oder flüssig, versehen und über Rakel auf die untere und obere Trägerfolie aufgerakelt und in der Breite eingestellt. Auf die Harzansatzschicht der unteren Trägerfolie wird das Schnittglas zum Beispiel von Endlos-Rovings mit Schneidewerken aufdosiert. Danach legt sich die obere Trägerfolie mit dem Harzansatz auf den Schnittfaserbelag. Durch einen anschließenden Walkprozess werden die Fasern mit dem Harzansatz vermischt/getränkt und als Harzmatte anschließend auf eine Rolle gewickelt oder als flächiges Halbzeug für den Reifeprozess zwischengelagert. Durch den Reifeprozess dickt der Harzansatz so stark ein, dass die Trägerfolien rückstandsfrei abgezogen werden können und beim Fließpressen die Glaspressung entsprechend mit der Matrix fließen.

Aus dem flächigen Halbzeug oder den Rollen werden, abgestimmt auf das jeweils herzustellende Formteil, Zuschnittmatten herausgeschnitten und in einer Formpresse einfach oder als Paket abgelegt und verpresst.
Der Nachteil dieses Verfahrens ist, dass das SMC-Halbzeug erst nach einer langen Reifezeit verarbeitet werden kann, wodurch sich die Herstellungskosten erhöhen.

Von Nachteil ist weiter, dass das auf eine Rolle aufgewickelte Halbzeug während des Reifeprozesses sich verformt. Liegt die Rolle auf dem Boden, gibt es Pressungen auf die unten liegenden SMC-Bahnen und damit ein Verdrängen des Materials zur Seite. Werden die Rollen über eine Achse aufgehängt, ist der negative Effekt während der Reifelagerung umgekehrt. Das Material fließt nach unten und die Bahnschichten im unteren Bereich der Rolle werden höhere Flächengewichte aufweisen, als die oberen Bahnschichten. Diese zwangsläufig unterschiedlichen Flächengewichte zwingen dazu, die Matten je Form nicht nur der Länge nach abzuschneiden sondern zusätzlich zu wiegen, um je Fertigungsteil die gleiche Füllung und damit Teiledicke zu erhalten. Wären die Flächengewichte der Bahnen konstant, könnten die benötigten SMC-Bahnabschnitte mit einer Längenmessuhr automatisch geschnitten werden, was die Herstellungskosten erheblich erniedrigen und die Qualität der Formteile verbessern würde. Diese im Dickenquerschnitt unterschiedliche Zuschnittmatten-Zusammensetzung ist auch der Grund, warum die Herstellung von SMC-Formteilen bisher unzureichend automatisierbar war.

Mit EP 1 386 721 A1 ist ein Verfahren und eine Anlage bekannt geworden, der die Aufgabe zugrunde lag die Harzmatten (SMC-Halbzeug) mit der geeigneten Plastizität für eine unmittelbar folgende Direktverarbeitung zu Formteilen bereitzustellen. Besonders bevorzugt sollte dabei auf Folien verzichtet werden können und die Steuerung der Reifezeit bzw. der Eindickzeit der Harzmatten wurde im Wesentlichen dem Wärmeeintrag in einem temperierten Eindick-Durchlaufspeicher durchgeführt. Mittlerweile ist das kontinuierliche Direktverfahren zur Herstellung faserverstärkter Formteile ohne Zwischenlagerung der Harzmatten für den Reifeprozess im industriellen Leben verwirklicht und weist deutliche Vorzüge im Bereich der Just-In-Time-Produktion auf, wobei wesentliche Probleme der Lagerhaltung und insbesondere der Just-In-Time-Lieferung vermieden werden können. Besonders ist es hervorzuheben, dass mit EP 1 386 721 A1 eine möglichst kompakte Anlage offenbart worden ist, in der in einem Eindick-Durchlaufspeicher für einen zeitlich vorgegebenen Reifeprozess, je nach der erforderlichen Länge, die temperierbaren Bandträgern mäanderförmig in einem Gehäuse angeordnet wurden. Durch die Anordnung der Bandträger und ihrer Ausführung in Länge und Anzahl übereinander kann der Reifeprozess mit entsprechender Reifezeit ausgelegt werden.
Grundsätzlich hat sich diese Anlage bewährt, weist aber im hochindustriellen Betrieb mangelnde Flexibilität auf. Diese mangelnde Flexibilität zeigt sich beispielsweise durch eine träge Temperierung des Eindick-Durchlaufspeichers. Diese entsteht insbesondere durch die latente Wärmespeicherung in den Vorrichtungsteilen, insbesondere in den Umlenkrollen und tragenden Anlagenteilen, die eine Temperaturänderung innerhalb kürzester Frist bei einer Produktionsumstellungen nahezu verhindert. Auch benötigt die Anlage im Wesentlichen zu lange um auf Betriebstemperatur zu gelangen.

Neben einer Produktionsumstellung besteht aber auch die Möglichkeit, dass eine derartige Produktionsanlage zur Herstellung von Harzmatten nicht nur eine Formpresse, sondern mehrere Formpressen bedient. Fällt eine dieser Pressen wegen Werkzeugwechsel, Reparatur- oder Wartungsbedarf, mangelnder Auslastung plötzlich aus, muss die Produktionsanlage zur Herstellung von Harzmatten plötzlich eine andere Austragsleistung an Harzmatten bieten können. Herkömmlichen Anlagen sind hierzu aber Grenzen gesetzt. Beispielsweise kann die Durchlaufzeit des Harzansatzes respektive der Harzmatte durch den Eindick-Durchlaufspeicher reduziert werden. Dies bedingt eine geringere Austragsleistung pro Zeiteinheit, erhöht aber gleichzeitig auch die Verweildauer im Eindick-Durchlaufspeicher. Der Harzansatz weist aber für die Direktproduktion ein relativ geringes Zeitfenster zur Verwendung in einer Formpresse auf, so dass die Möglichkeit besteht, dass im vorliegenden Beispiel die erhöhte Verweildauer im Eindick-Durchlaufspeicher zu einer vollständigen Aushärtung der Harzmatte und damit zu unbrauchbarem Material führt. In entgegengesetzter Anwendung würden Harzmatten entstehen, die noch nicht genügend gereift sind.

Alternativ könnte natürlich auch die einzutragende Menge an Harzansatz bei der Aufrakelung reduziert werden, womit ebenfalls die Herstellungsmenge der Harzmatten pro Zeiteinheit reduziert werden, was wiederum mangels Masse zu einer zu schnellen Reifung im Eindick-Durchlaufspeicher führt und ggf. wiederum die Harzmatten unbrauchbar oder zumindest nahe an der Unbrauchbarkeit produziert. Auch ist beispielsweise der Spielraum der einzutragenden Harzansatzmenge Grenzen gesetzt, weil beispielsweise bei einer hochvolumigen Produktion der Wärmeeintrag zu gering oder nicht tief genug wirkend in der Harzmatte ankommt oder bei einer geringvolumigen Produktion der Austrag des Harzansatzes durch die Rakelkästen zu gering und damit nicht ordentlich steuerbar respektive regelbar und/oder die Benetzung von optionalen Glasfasersträngen nicht ordentlich möglich ist.

Die vorliegenden Beispiele sind nicht als rein ausschließende Beispiele gedacht, denn die obigen Möglichkeiten sind durchaus verwendbar, scheitern aber spätestens bei zu starker Ausnutzung möglicher einstellbarer Produktionsparameter der Harzmatten-Herstellungsanlage: Insbesondere dann, wenn diese für die Versorgung von unterschiedlich stark ausgelasteten Formpressen mit möglichem Werkzeugwechsel mit unterschiedlichen Volumen- und/oder Zeitanforderungen vorgesehen ist.

Im Übrigen sei noch auf die JP 4 135 704 A sowie die FR 1 324 495 A hingewiesen.

Die Aufgabe der Erfindung besteht darin, eine Anlage und ein Verfahren zum Betreiben einer Anlage zur Herstellung von faserverstärkten Harzmatten für die Direktproduktion von SMC-Formteilen zu schaffen, die einen wesentlich größeren Spielraum und eine vereinfachte Anlagentechnik hinsichtlich der möglichen Produktionsmenge pro Zeiteinheit bezogen auf den Bedarf gegenüber dem Stand der Technik aufweist. Dabei soll insbesondere in der Anlage die Aufgabe gelöst werden, dass bei einer möglichen Verlängerung oder Verkürzung der Transportstrecke im Bereich der Harzmattenherstellung und/oder der Reifung der Harzmatte der Austrittspunkt der Harzmatte lokal am gleichen Ort angeordnet ist.

Die Lösung der Aufgabe besteht für eine Anlage darin,
- dass zumindest in Teilen der Transportstrecke zumindest ein endlos umlaufendes Band angeordnet ist und dass zur Veränderung der Transportstrecke zumindest eine Stellvorrichtung mit einer korrespondierenden Stellvorrichtung angeordnet ist; und/oder
- dass zumindest in Teilen der Transportstrecke zumindest ein in seiner Länge durch eine Stellvorrichtung und/oder in seiner Lage durch eine Stellvorrichtung veränderliches Bandtablett angeordnet ist; und/oder
- dass zumindest in Teilen der Transportstrecke ein in seiner Länge und/oder in seiner Lage durch eine Stellvorrichtung veränderlicher Stütztisch angeordnet ist.

Die Lösung der Aufgabe besteht für das Verfahren darin, dass mittels zumindest einer Steuerungsvorrichtung, die mit
- zumindest einer Formpresse,
- zumindest einer Übergabevorrichtung,
- einer Eindickvorrichtung und
- einer Produktionsvorrichtung zur Erstellung einer endlosen Harzmatten steuerungs- und/oder regelungstechnisch wirkverbunden ist,
die Austragsmenge der Harzmatten an den notwendigen Bedarf der Formpresse angepasst wird.

In Vorteilhafter Weise ist es nun möglich mit der erfindungsgemäßen Anlage bzw. mit dem Verfahren Harzmatten für die Direktverwendung zu produzieren wobei
- entweder mehrere Formpressen bedient werden können,
- unterschiedlichste Werkzeuge (Volumen- und/oder Zeitbezogen) Verwendung finden können oder
- extrem hochreaktive Harzansätze verwendet werden können, die ein geringes Zeitfenster zur Verpressung aufweisen.

Es wird vorausgesetzt, dass die Versorgung mit Harzansatz zur Aufrakelung auf Folien oder Förderbänder grundsätzlich sichergestellt ist, wobei dieser entweder in entsprechender Menge angeliefert oder vor Ort mit geeigneten Herstellungsvorrichtungen produziert wird.

Die oben aufgereihten Vorteile sind insbesondere entscheidend, wenn mehrere Formpressen insgesamt in einer Herstellungsanlage für SMC-Bauteile angeordnet sind. Insbesondere ist bevorzugt, dass eine vollständige und automatisierte Steuerung der Gesamtanlage aus zumindest einer Harzmattenproduktion und zumindest einer Formpresse mit zwischen diesen beiden Hauptelementen zwischengeschalteten Übergabevorrichtung angeordnet ist. Verfahrenstechnisch werden die einzelnen Elemente zusammengeschaltet und derart gesteuert, dass Produktionsunterbrechungen oder Wartungsarbeiten in den Formpressen automatisch so gesteuert werden können, dass die Übergabevorrichtung und/oder der zuständige Anlagenteil zur Produktion der Harzmatten optimiert für die Bereitstellung der Harzmatten an den Formpressen sorgen, abhängig vom notwendigen Bedarf.

Im Wesen der Formpresse respektive deren Werkzeuge liegt es, dass alle vorgeschriebenen Pressungen eine Mindestreinigung des Werkzeuges vorgesehen ist. Weiter finden sich Wartungsintervalle, die ebenfalls in regelmäßigen Abständen anfallen, aber nur wenige Minuten dauern. Die Steuerungsvorrichtung steuert die Harzmattenproduktion derart, dass je nach zu erwartender Anforderung an Harzmatten durch die Pressensteuerungen immer die notwendige Anzahl an Harzmatten übergeben werden kann. Gleichzeitig verhindert die Steuerungsvorrichtung, dass aufgrund der Wartungs- oder Reinigungsintervalle eine Überproduktion an Harzmatten entsteht, die nicht verarbeitet werden können.

Mit der erfindungsgemäßen Lösung kann die Produktionsanlage auf Produktionsumstellungen optimal reagieren und muss sich nicht nur mit der Variation der Bandgeschwindigkeit und des Austragsvolumens der Harzmatten selbst begnügen. In einer erweiterten Aufgabe wird es insbesondere ermöglicht, den Austrittspunkt der Harzmatten aus der Anlage im Wesentlichen beizubehalten, so dass räumliche Veränderungen zwischen dem Austrittspunkt und den nachfolgenden Anlagen wie Formpressen, Übergabevorrichtungen, oder dergleichen nicht notwendig sind. Insbesondere ist es nun möglich einen im Stand der Technik bisher vernachlässigten weiteren wesentlichen Parameter der Reifung der Harzmatten, die Reifungsstrecke selbst, zu verändern. Die Veränderung dieses Parameters geschieht vorzugsweise unabhängig von den anderen Parametern.

Alternativ kann in diesem Zusammenhang zumindest ein zusätzlicher Parameter, insbesondere der Wärmeeintrag in die Harzmatte während der Reifung, verändert werden. Besonders bevorzugt wird in diesem Zusammenhang eine Mikrowellenanordnung verwendet, die den Wärmeeintrag, unabhängig von den lagernden respektive führenden Bändern, in die Harzmatte einbringen kann. Wärmeübertragung durch Konvektion ist zwar durchaus im Rahmen des machbaren und üblichen, aber hochwertige Bänder zum Transport der Harzmatten, insbesondere wenn keine Folien verwendet werden, weisen aber meist gute Isolierende Eigenschaften auf.

Im Übrigen ist es nicht zwingend notwendig, dass in der Anlage die Harzmatten mittels Förderbändern oder-tischen gefördert werden müssen. Insbesondere in der Eindickstrecke kann es möglich sein bei der Verwendung von Folien auf Bänder zu verzichten, da bei entsprechend starken Folien die Folien die Aufgaben der Bänder übernehmen und insbesondere durch die Eindickvorrichtung respektive -strecke führen. Vorzugsweise sind dann zwischen den Umlenkrollen Stützvorrichtungen, beispielsweise Stütztische, vorzugsweise teleskopisch oder klapptechnisch mittels geeigneter Vorrichtungen in ihrer Länge bzw. Auflagefläche für die Bänder respektive Folien mit den Harzmatten angeordnet.

Auch ist es denkbar, dass ein Teil der Eindickstrecke starr und ein zweiter Teil der Eindickstrecke in der Länge veränderbar ist, so dass insbesondere bei Großanlagen bevorzugt die Eindickstrecke physikalisch betrachtet aus zwei Vorrichtungen besteht, aus einer starren und einer verlängerbaren Eindickstrecke respektive Vorrichtung.

Hinsichtlich der Übergabevorrichtung ist zu bemerken, dass diese im Wesentlichen aus mehreren Funktionsgebenden Anlagenteilen bestehen kann, die nicht weiter ausgeführt oder vorgestellt werden können, da nicht alle möglichen Varianten an Anlagentypen bzw. -variationen besprochen werden können. Die Übergabevorrichtung umfasst aber im Sinne der Erfindung den Bereich ab dem Austrittspunkt der Harzmatte aus dem Bereich der Harzmattenproduktion. Vorzugsweise ist dieser Austrittspunkt mit der Hauptreifezeit der Harzmatte identisch. Im Wesen der Harzmatten ist dieser Zeitpunkt aber von vielerlei Faktoren abhängig und es gibt hier eher ein Hauptreifezeitfenster, dass sich aus den Zeitpunkten "frühest mögliche Verarbeitung" und "späteste Verarbeitung" definiert. Die außerhalb des Hauptreifezeitfensters liegenden Zeiten ergeben entweder unreife oder überreife Harzmatten die im Wesentlichen nicht mehr verpresst werden können. Bezüglich der spätesten Verarbeitung muss natürlich noch Zeit für die Übergabevorrichtung bzw. bis zum Eintrag in die Formpresse einberechnet werden. Eine Übergabevorrichtung besteht vorzugsweise aus einer Schneidvorrichtung, einer ggf. notwendigen Vorrichtung zum Abzug der optionalen Folien von den Harzmatten, einer Vorrichtung zur Zusammenstellung eines Harzmattengeleges aus einer oder mehreren Harzmatten, einer Vorrichtung zum Transport der Harzmatten/-gelege zu einer oder mehrere Formpressen und einer entsprechenden Transfervorrichtung zur Übergabe der Harzmatten/-gelege in eine Formpresse. Die genannten Fasern sind vorzugsweise Schnittglas aus Rovings und/oder Langfasern oder Kurzfasern zur Verbesserung der Steifigkeit des SMC-Formteils.

Hinsichtlich der Definition der Ein- und Austrittspunkte sei vermerkt, dass diese im Wesentlichen innerhalb der Eindickvorrichtung angeordnet sind, diese Punkte können sich aber je nach Bedarf bis zum Ende einer vorgelagerten Vorrichtung, wie der Walk- und Tränkvorrichtung und/oder bis zu einer nachgelagerten Vorrichtung, wie der Schneidvorrichtung, erstrecken.

Als Vorteil und Ergebnis aller Verfahrensschritte und Merkmale der Anlage gemäß der Erfindung können faserverstärkte Zuschnittmatten mit der richtigen Plastizität in einem SMC-Direktverfahren der Weiterverarbeitung zu faserverstärkten duroplastischen Formteilen zugeführt werden, das heißt, das erfindungsgemäße SMC-Direktverfahren ist in der Lage höchst reproduzierbare langfaserverstärkte duroplastische Materialien dem Verarbeiter zur Verfügung zu stellen.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: eine beispielhafte Anlage zur kontinuierlichen Herstellung von faserverstärkten Harzmatten im Zuge der Herstellung von faserverstärkten Formteilen mittels Fließpressen in einer Formpresse in schematischer Seitenansicht mit einer Produktionsrichtung von links nach rechts, wobei die Harzmatten zwischen zwei endlosen Bändern ohne die Zwischenlage von Folien hergestellt werden, wobei die Transportstrecke in der Eindickvorrichtung im wesentlichen in einer winkeligen Ebene zur vertikalen oder horizontalen Ebene ausgeführt ist,
- Figur 2: ein beispielhafter anfänglicher Anlagenteil in schematischer Seitenansicht nach Figur 1, wobei die Harzmatten zwischen zwei Folien hergestellt und mittels mehrerer endloser Bänder geführt werden und die Transportstrecke in der Eindickvorrichtung im wesentlichen vertikal ausgeführt ist,
- Figur 3: eine beispielhafter Ausschnitt der Anlage mit einer zwischen der Produktionsvorrichtung für Harzmatten und der Eindickvorrichtung angeordneter Heizvorrichtung, wobei die Harzmatte in der Eindickvorrichtung im wesentlichen in horizontalen Ebene an Umlenkrollen umgelenkt und geführt wird,
- Figur 4: eine Variante der Anlage nach Figur 1, wobei die Harzmatte zwischen Folien durch die Eindickvorrichtung geführt wird und zur Stützung der Harzmatte Stütztische zwischen den Umlenkrollen angeordnet sind,
- Figur 5: einen Detailausschnitt einer möglichen Eindickvorrichtung bestehend aus mehreren Bandtabletts, die zur Einstellung der Transportstrecke horizontal und/oder vertikal bewegbar angeordnet sind, wobei die Übergabevorrichtung der Harzmatte in die Eindickvorrichtung optional ebenfalls höhenverstellbar angeordnet sein kann,
- Figur 6: einen weiteren Detailausschnitt einer möglichen veränderlichen Transportstrecke in einer Eindickvorrichtung mit einer Vielzahl an verstellbaren Umlenkrollen und
- Figur 7: eine schematische Darstellung einer Steuer- und/oder Regelungsvorrichtung mit einer mindestnötigen Verknüpfung der einzelnen Anlagenteile zur Ausführung eines denkbaren Verfahrens zum Betreiben einer derartigen Anlage.

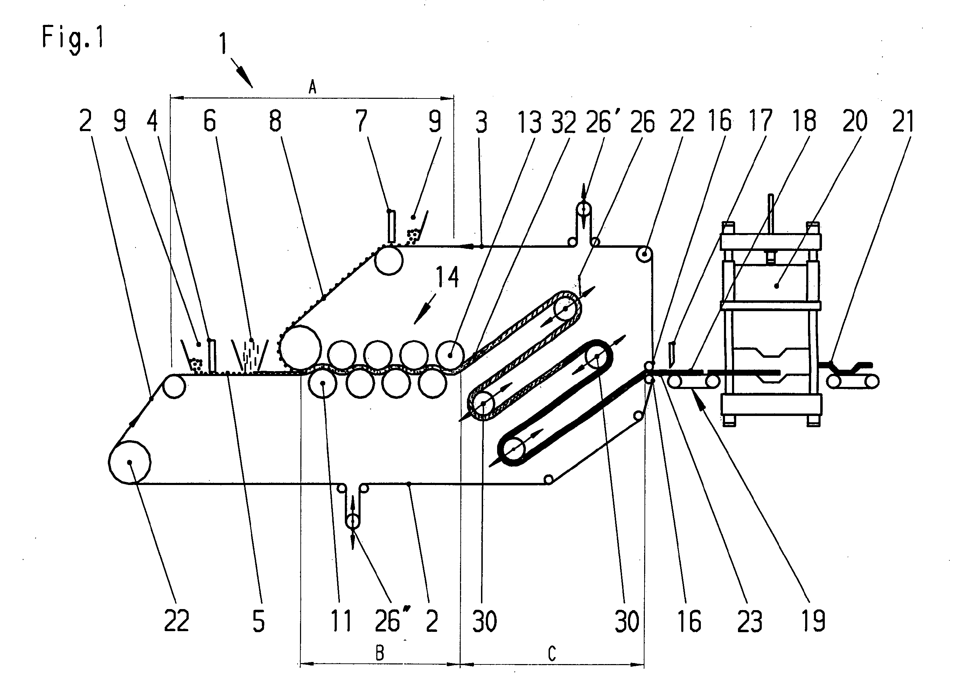

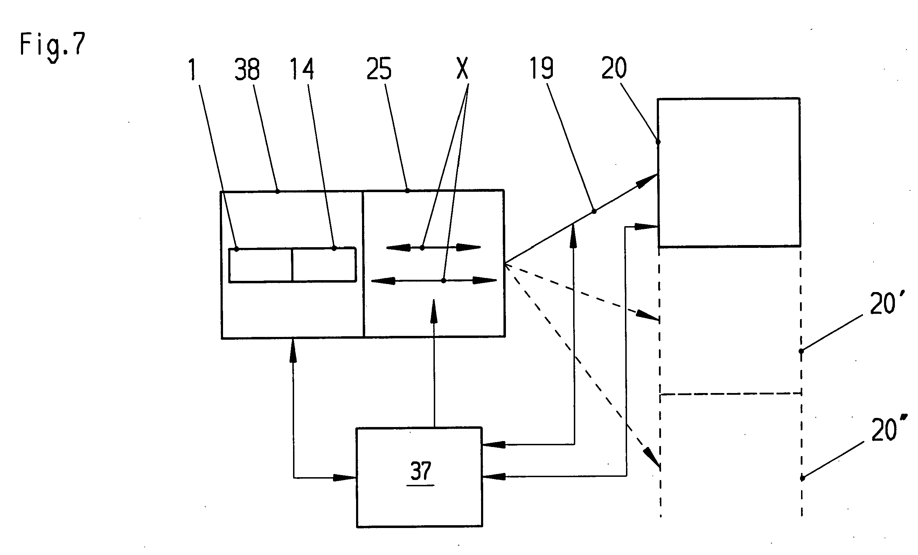

Figur 1 zeigt eine Anlage, die auch zur Durchführung des Verfahrens geeignet aber auch eigenständig betrieben werden kann, in einer Seitenansicht. Sie besteht zur Herstellung faserverstärkter Formteile (SMC) mittels Fließpressen in ihren markanten Teilen aus einer Mischvorrichtung 1 mit einer Harzansatzaufbringstrecke A, der Walk- und Tränkstrecke B und dem Eindickbereich C. Eine Mischstation für die Mischung der Einzelkomponenten oder ein Dosierbunker für den Harzansatz 9 ist nicht dargestellt. Die Anlage nach Figur 1 zeigt, dass in der Mischvorrichtung 1, der Walk- und Tränkvorrichtung 14 sowie im Eindick-Durchlaufspeicher 25 nicht Einmalfolien Verwendung finden, sondern zwei wieder verwendbare, endlose Bänder 2 und 3, die die Harzmatte 10 über Umlenkrollen 22 und 30 durch diese Anlagenteile führen. Der vorgemischte Harzansatz 9 wird zuerst mit der Rakel 4 auf das untere Band 2 zur Harzansatzschicht 5 aufgerakelt. Auf diese untere Harzansatzschicht 5 werden dann Fasern 6 aus Schnittglas oder Lang- bzw. Kurzfasern aufdosiert. Es können auch, insbesondere für tragende Teile, Endlosfasern oder Fasermatten eingelegt werden. Gleichzeitig erfolgt ein Aufrakeln der Harzansatzschicht 8 mittels der Rakel 7 auf das obere Band 3. Nach dem Zusammenführen der beiden Harzansatzschichten 5 (mit den Fasern 6) und 8 und ihr Einführen zwischen die unteren und oberen Walzen 11 und 13 wird die Harzmatte 10 in der Walk- und Tränkstrecke B (Walk- und Tränkvorrichtung 14) geformt, wobei die Fasern 6 mit dem Harzansatz 9 durchtränkt und zusammengewalkt werden. Die so geformte endlose Harzmatte 10 wird dann mittels Umlenkrollen 30, vorzugsweise angetrieben, dabei stets an den Bändern 2 und 3 anliegend, zum Reifen durch eine Eindickvorrichtung 25 geführt. Die Transportstrecke X des Eindickbereichs C in der Eindickvorrichtung 25 ist im wesentlich definiert durch den Eintrittspunkt 32 in die Eindickvorrichtung 25 und den Austrittpunkt 23 an oder kurz vor einem Schneidwerk 17. Eine Darstellung der Transportstrecke "X" hätte zu einer zeichnerischen Überfrachtung der schematischen Figuren 1 bis 6 geführt, so dass die Transportstrecke in ihrer veränderlichen Form abstrahiert nur in Figur 7 dargestellt ist. Ist die Harzmatte 10 gereift wird sie von den Messerleisten 16 von den Bändern 2 und 3 abgelöst und dem Schneidwerk 17, vorzugsweise zugehörig zu einer Übergabevorrichtung 19, zugeführt. Im Schneidwerk 17 wird die Harzmatte 10 je nach Vorgabe in der Länge und/oder in der Breite geschnitten, und mittels in der Übergabevorrichtung 19 angeordneter Übergabemittel, hier ein Transportband, als Zuschnittmatte 18 der Formpresse 20 zugeführt und in der Formpresse 20 zum Formteil 21 verpresst und ausgehärtet. Soll nun die Transportstrecke X in Ihrer Länge verändert werden, werden die Umlenkrollen 30 in ihrem Abstand zueinander mittels einer Stellvorrichtung 26 verstellt. Um die Bänder 2 und 3 weiterhin in einem gespanntem Zustand in der Anlage zu halten, wird das obere Band 3 mittels einer Stellvorrichtung 26' außerhalb der Eindickvorrichtung entsprechend der Veränderung der Umlenkrollen 30 nachgeführt oder zusätzlich gespannt. Analog wird dies für das untere Band 2 mittels der Stellvorrichtung 26" durchgeführt.

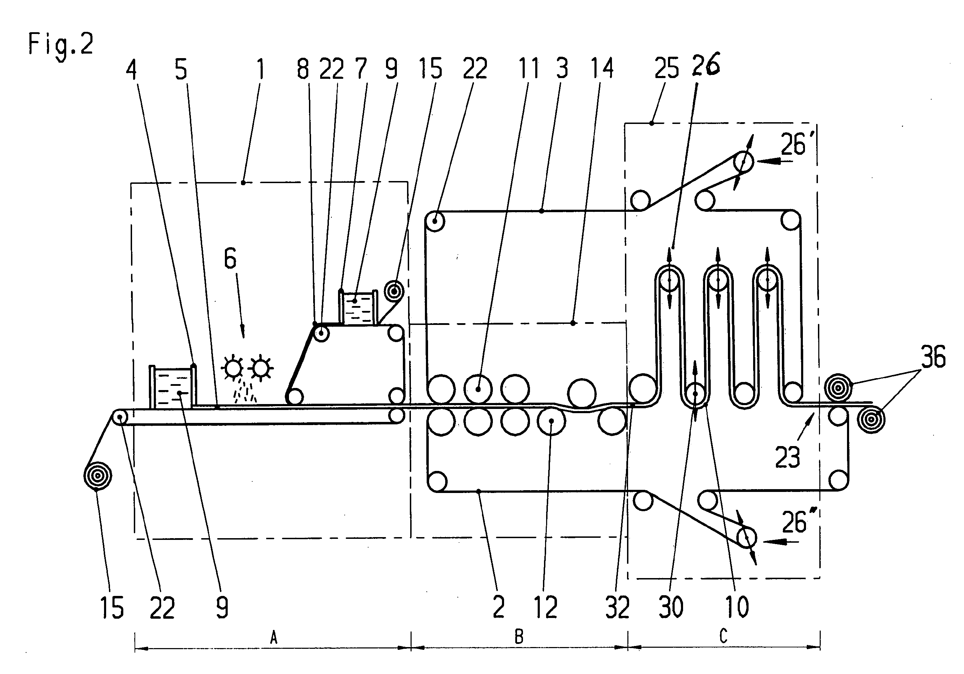

Figur 2 zeigt einen beispielhaften anfänglichen Anlagenteil in schematischer Seitenansicht nach Figur 1. Unterschiedlich ist, dass über zwei Folienabzüge 15 oben und unten auf Förderbänder in der Mischstrecke A der Mischvorrichtung 1 die Harzansatzschichten 5 und 8 mittels der Rakeln 4 und 7 gebildet werden. Aufgrund der Folien ist es möglich die einzelnen Anlagenbereiche voneinander zu trennen. Neben einer denkbaren weiteren Schnittstelle und Übergabe der Harzmatte 10 nach der Walk- und Tränkvorrichtung 14 ist auch die dargestellte Variante sinnvoll, in der die Harzmatte 10 wieder in zwei umlaufenden Bändern 2 und 3 geführt wird. Die Verstellung der Transportstrecke X ist wieder analog wie in Figur 1 mittels der Stellvorrichtungen 26, 26' und 26" ausgeführt, wobei eine oder eine Vielzahl an Umlenkrollen verstellbar angeordnet sind. Nach dem Austrittspunkt 23 werden die Folien vorzugsweise vor der Übergabevorrichtung 19 von der Harzmatte 10 mittels zweier Folienaufwicklungen 36 abgezogen, da diese nach der Reifung nur noch bedingt klebrige Oberflächen aufweist. Der Transfer von so genannten Prepregs ist bekannter Stand der Technik und muss hier nicht weiter vertieft werden. Bemerkenswert ist, dass die Bänder 2 und 3 im Wesentlichen vertikal geführt werden und die Stellvorrichtungen 26 im Wesentlichen vertikal arbeitend angeordnet sind.

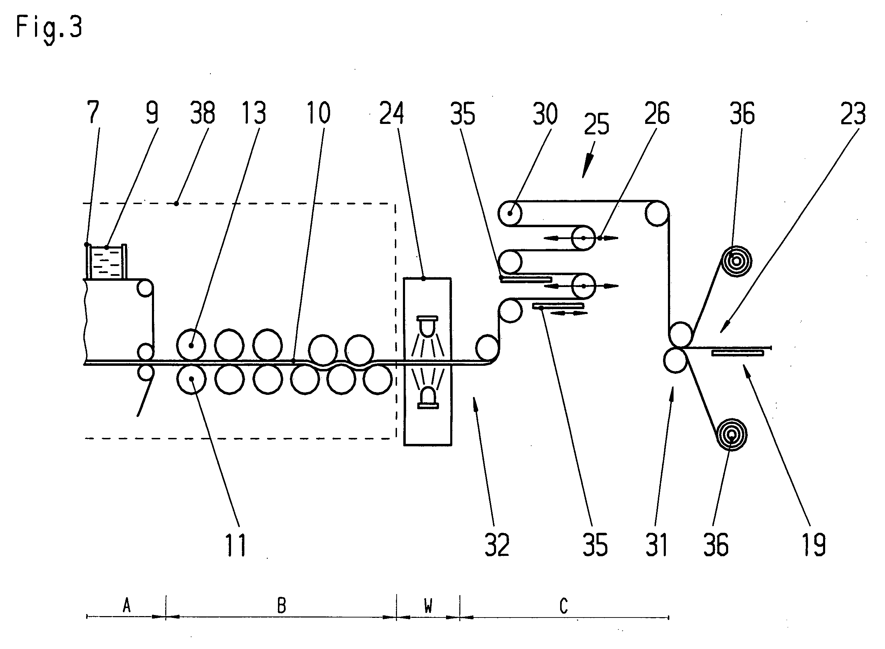

Figur 3 zeigt eine weitere Alternative der Anlage mit einer zwischen der Produktionsvorrichtung 38 für eine endlose Harzmatte 10 und der Eindickvorrichtung 25 angeordneter Heizvorrichtung 24, wobei die Harzmatte 10 in der Eindickvorrichtung 25 im wesentlichen in horizontalen Ebenen an Umlenkrollen 30 umgelenkt und geführt wird. Die Heizvorrichtung 24 ist vorzugsweise als Mikrowellen- oder Hochfrequenzheizung ausgeführt, aber auch konventionelle Konvektionsheizungen oder Wärmetunnel sind im Bereich der Wärmeeinbringstrecke W denkbar.

Um ein Durchhängen der in Folien geführten Harzmatte 10 zu vermeiden sind in Teilen der Transportstrecke X zwischen dem Eintrittspunkt 32 und dem Austrittspunkt 23 Stütztische 35 angeordnet. Die Stütztische 35 können mittels geeigneter Stellvorrichtungen teleskopierbar und/oder beweglich angeordnet sein. Vorzugsweise weisen die Stütztische 35 eine reibungsarme Oberfläche auf der Seite der Folien respektive der Harzmatte 10 auf. Neben dem je nach Streckenlänge der Transportstrecke X notwendigen angetriebenen Umlenkrollen 30 kann die Anordnung eines Abzugswalzenpaars 31, vorzugsweise mit einer geriffelten oder reibungsstarken Oberfläche versehen, angeordnet sein, die die Harzmatte 10 im Eindickbereich C unter Spannung halten und gleichzeitig die Folienaufwicklung 36 unterstützen können. Durch das Abzugswalzenpaar 31 wird gleichzeitig verhindert, dass Ablösungserscheinungen der Folien von der Harzmatte bis in den Eindickbereich C auftreten, insofern diese direkt nach dem Abzugswalzenpaar 31 angeordnet ist.

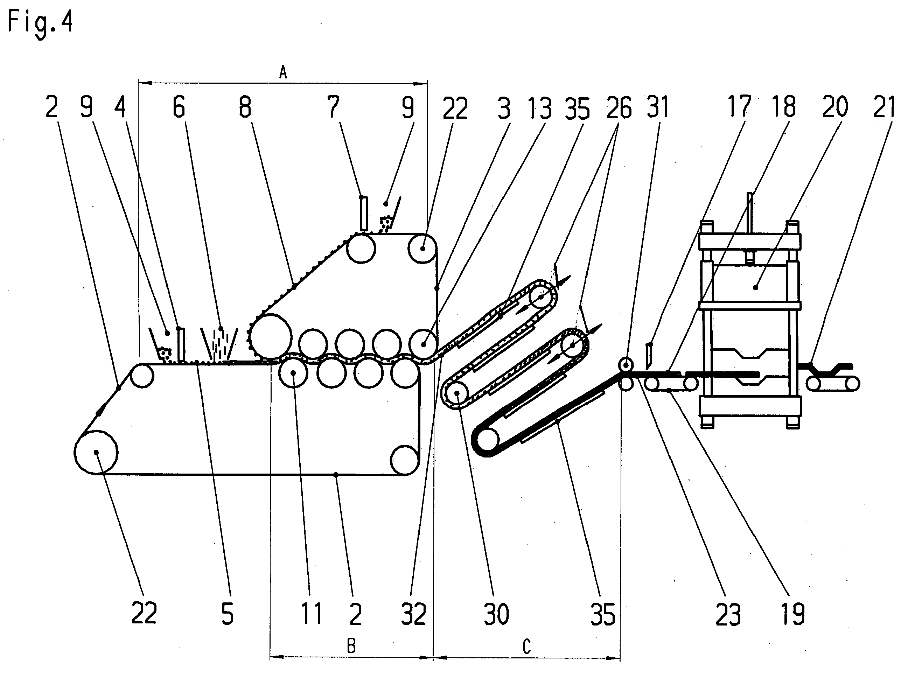

Figur 4 zeigt eine Variante der Anlage nach den Figuren 1 und 2, wobei die Harzmatte 10 nur zwischen Folien durch die Eindickvorrichtung 25 geführt wird. Diese Anordnung hat in der Hinsicht Vorteile, dass hierbei eine striktere Trennung der Anlagenteile Produktionsvorrichtung 38 für die Harzmatten 10 von der Eindickvorrichtung 25 zur Reifung der Harzmatten 10 gewährleistet ist. Insofern wird auch gegenüber den vorhergehenden vorgeschlagenen Anlagen nicht erforderlich sein zusätzliche Stellvorrichtungen 26'... vorzusehen, da allein durch die Verstellung der Stellvorrichtungen 26 der Umlenkrollen 30 eine problemlose Verlängerung oder Verkürzung der Transportstrecke X möglich ist. In einer bevorzugten Ausführungsform sind die hier stützend angeordneten Stütztische 35 und/oder die Umlenkrollen 30 beheizt ausgeführt. Die Beheizung der einzelnen Vorrichtungen wird vorzugsweise durch eine zentrale Steuervorrichtung eingestellt und ist dann entsprechend abhängig von der im Bedarfsfall notwendigen Ausgangsleistung der Eindickvorrichtung 25. In vorliegendem Beispiel wird natürlich der Austrag an Harzmatten 10 aus der Eindickvorrichtung 25 in dem Moment verringert, in dem zumindest eine Umlenkrolle 30 zur benachbarten Umlenkrolle 30 den Abstand durch die Stellvorrichtung 26 vergrößert. Dies geschieht vorzugsweise nicht schlagartig sondern angepasst an die allgemeine Produktionsgeschwindigkeit der vorgeschalteten Produktionsvorrichtung 38.

Zur Verdeutlichung eines möglichen Verfahrensprinzips wird wie folgt mittels einer zentralen Steuerungsvorrichtung 37 angeordnet, die vorzugsweise Steuer- und Regelungstechnische Fähigkeiten aufweist. Ein denkbarer Regelkreis besteht darin, dass als Führungsgröße der regelmäßige Bedarf an Zuschnittmatten 18 respektive der Menge an endloser Harzmatte 10 pro Zeiteinheit ermittelt wird. Beispielsweise bei einer Presse über 100 Presszyklen. Benötigt die Presse jeweils jede Minute eine Zuschnittmatte 18 ergibt sich ein Bedarf von 100 Zuschnittmatten bei 100 Presszyklen in 100 Minuten. Wird aber alle 10 Presszyklen ein Reinigungsvorgang des Werkzeuges zwischengeschaltet, der 1 Minute dauert, verlängert sich die Bereitstellungszeit der 100 Zuschnittmatten 18 auf 110 Minuten, wobei aber in 10 Minuten 10 Zuschnittmatten benötigt werden und anschließend während des Reinigungsvorganges keine Zuschnittmatte in die Formpresse 20 eingelegt werden kann. Gleichzeitig soll aber die Produktionsvorrichtung 38 kontinuierlich weiterproduzieren können, da dieser Herstellungsprozess der Harzmatten in dieser Konfiguration nicht taktweise durchgeführt werden kann. Entsprechend dem erfindungsgemäßen Verfahren passt die Steuerungsvorrichtung 37 die Produktion der Harzmatte 10 an den notwendigen Bedarf über 100 Minuten derart an, dass während dem Bedarf der 10 Presszyklen die notwendige Anzahl an Zuschnittmatten 18 bereit stehen und während der Wartezeit auf den nächsten möglichen Presszyklus keine Harzmatte 10 aus der Eindickvorrichtung 25 austritt. Dies ist natürlich eine simplifizierte Verfahrensdarstellung, da die Steuerungsvorrichtung 37 entsprechend der notwendigen Manipulierzeit der Übergabevorrichtung 19 zum Zuschnitt und zum Transfer der Zuschnittmatte 18 entsprechend im Vorgriff arbeiten muss. Es bietet sich aus diesen Gründen auch die Anlagenvariante nach Figur 4 an, da besonders hier die beiden Bereiche Harzmattenherstellung und Eindickvorrichtung steuerungs- und regelungstechnisch sauber voneinander trennbar sind und nicht durch ein durchlaufendes Band 2 oder 3 miteinander in Verbindung stehen und hilfsweise weitere Stellvorrichtungen 26', 26" mit in die Steuerung respektive Regelung eingebunden werden müssen.

Vereinfacht dargestellt lässt sich der Regelkreis der Gesamtanlage wie folgt darstellen: Die Führungsgröße besteht aus dem Bedarf pro Zeiteinheit an notwendigen Zuschnittmatten 18 für eine oder mehrere Pressen 20, 20', 20", ..., wobei eine oder mögliche Störgrößen vorhersehbare Ereignisse wie Werkzeugwechsel, Werkzeugreinigung, Wartungsintervalle für Werkzeug, Formpresse 20, Übergabevorrichtung 19, vorzugsweise bei mehreren möglichen Formpressen 20 mit entsprechender Verzweigung der Übergabevorrichtung 19. Zum Ausgleich der Störgrößen wird dabei vorzugsweise zur Anpassung der Austragsmenge der Harzmatten 10 die Länge der Transportstrecke X in der Eindickvorrichtung 25 und/oder die Produktionsgeschwindigkeit der Produktionsvorrichtung an den notwendigen Bedarf angepasst und verändert. Weiter kann zur Anpassung der Austragsmenge an Harzmatten 10 aus der Eindickvorrichtung 25 die einzubringende Wärmeenergie durch die Heizvorrichtung 24 an die Länge der Transportstrecke X angepasst wird. Alternativ können natürlich auch optionale Heizeinrichtungen in der Eindickvorrichtung 25, wie die Stütztische 35 und/oder die Umlenkrollen 30, darin eingebunden werden. Eine makroskopische Betrachtung der Steuervorrichtung 37 findet sich in der Beschreibung zur Figur 7.

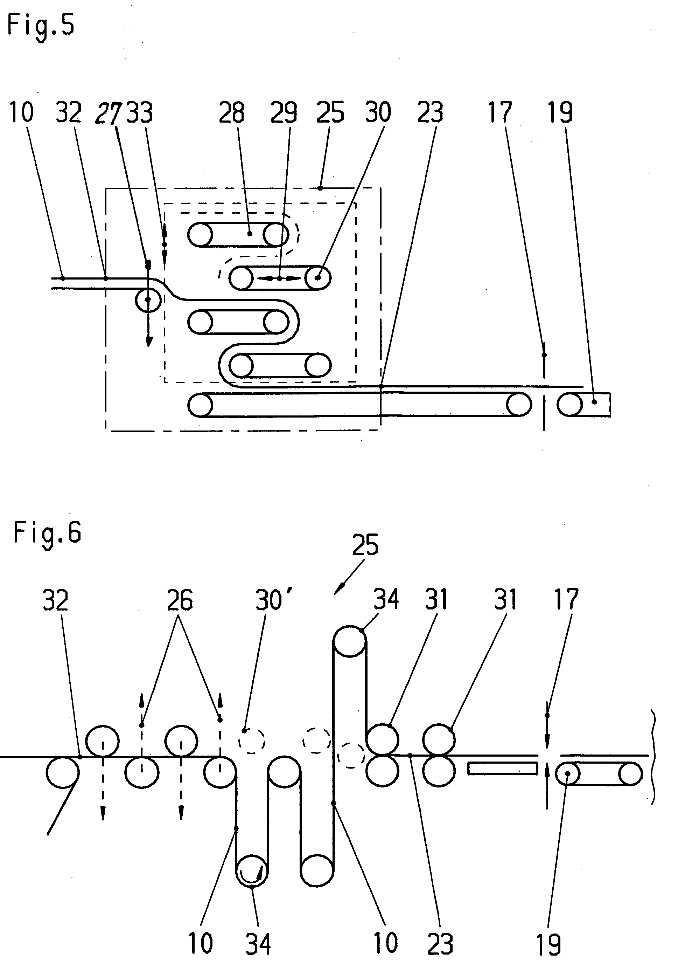

Figur 5 zeigt im Detail einen Ausschnitt aus einer weiteren möglichen Eindickvorrichtung 25 bestehend aus mehreren Bandtabletts 28, die zur Einstellung der Transportstrecke X horizontal mittels einer Stellvorrichtung 29 und/oder vertikal einzeln oder gesamt mittels einer geeigneten Stellvorrichtung 33 bewegbar angeordnet sind. Die Stellvorrichtung 29 kann natürlich auch oder nur dazu geeignet sein die Länge des Bandtabletts 28 zu verändern. Zur Unterstützung kann die Übergabevorrichtung 19 der Harzmatte 10 in die Eindickvorrichtung 25, ausgeführt durch ein optionales Förderband an einer Umlenkrolle oder nicht dargestellt an einer einzelnen Umlenkrolle, mittels einer Stellvorrichtung 27 bewegbar, vorzugsweise vertikal bewegbar, angeordnet sein. Die vorliegende Ausführung wäre beispielsweise auch dafür geeignet nach einer gezielten Produktionsunterbrechung der Folien die Harzmatte 10 auf eine unterschiedliche Anzahl von Bandtabletts 28 aufzulegen, wobei im vorliegenden Falle nur zwei Bandtabletts 28 zum Transport der Harzmatte 10 durch den Eindickbereich C aktiv eingeschaltet sind. Alternativ können natürlich alternativ alle Bandtabletts 28 durchlaufen werden und durch die horizontale Verschiebung der Bandtabletts 28, die jeweils ein eigenständiges umlaufendes Band oder andere Fördermittel (Mehrfachrollenanordnung, Schrittschaltwerke, Vibrationsmittel oder dergleichen) aufweisen. Die kürzeste Transportstrecke X würde sich entsprechend bei einem nur geringen Eingriff der Bandtabletts 28 mit der Harzmatte 10 ergeben, indem die Harzmatte 10 quasi direkt auf das letzte Förderband abgelegt wird. Die längste Transportstrecke X ergibt sich wenn die Transporttabletts mittels der Stellvorrichtungen 29 so verfahren werden, dass diese vollflächig auf diesen abgelegt und transportiert werden. Zur Extremeinstellung könnten die Bandtabletts 28 sogar soweit gegensätzlich zueinander verfahren werden, dass die Harzmatte 10 bis zur Auflage auf dem jeweiligen nächsten Bandtablett 28 frei hängen. Auch hier zeigt sich die mögliche kleine und kompakte Bauweise der Gesamtanlage, speziell der Eindickvorrichtung 25 mit einer einstellbaren Transportstrecke X.

Figur 6 zeigt ein ähnliches Anordnungsprinzip von vorzugsweise eher dünnen Harzmatten 10, wobei in der Eindickvorrichtung 25 mit einer Vielzahl an verstellbaren Umlenkrollen 30' die veränderliche Transportstrecke X im Eindickbereich C gebildet wird. Die kürzeste Transportstrecke X, entsprechend dem Eindickbereich C, wird gebildet, wenn die Umlenkrollen 30', in dieser Figur als Antriebswalzen 34 mit einer nicht dargestellten Antriebsvorrichtung ausgeführt, derart durch die Stellvorrichtungen 26 angeordnet werden, dass die Harzmatte 10 in einer möglichst geraden Linie vom Eintrittspunkt 32 bis zum Austrittspunkt 23, vorzugsweise gebildet durch das Abzugswalzenpaar 31, verläuft. Diese Anordnung ist im linken Bereich dargestellt, wobei bei der derzeitig verlängerten Transportstrecke X nach der Zeichnung die Antriebsrollen 34 an dem Ort der strichlierten Umlenkwalzen 30' stehen würden. Bevorzugt wird aber im Eindickbereich C zumindest eine Art walkende Bewegung durchgeführt, so dass die Umlenkrollen 30 respektive die Antriebswalzen 34 ähnlich wie in der Walz- und Tränkstrecke B stehen werden und für eine gewisse durchgehende Spannung der Folien auf der Harzmatte 10 und eine Walkung der Harzmatte 10 sorgen werden.

Bei Bedarf kann nun eine Antriebswalze 34 nach der anderen in die Harzmatte 10 hineinverfahren werden, so dass sich durch das Verfahren der Antriebswalzen 34 eine Verlängerung der Transportstrecke X im Eindickbereich C ergibt.

Zuletzt wird in Figur 7 in einer stark makroskopischen und schematische Darstellung eine Steuer- 37 und/oder Regelungsvorrichtung mit einer mindestnötigen Verknüpfung der einzelnen Anlagenteile zur Ausführung eines denkbaren Verfahrens zum Betreiben einer derartigen Anlage dargestellt. Dabei ist zumindest eine Steuerungsvorrichtung 37 mit zumindest einer der folgenden Anlagenteile steuerungs- und/oder regelungstechnisch wirkverbunden ist: einer Formpresse 20, einer Übergabevorrichtung 19, einer Eindickvorrichtung 25 und einer Produktionsvorrichtung 38 zur Erstellung einer endlosen Harzmatten 10. Hinsichtlich steuer- und regelungstechnischer Begrifflichkeiten sei darauf hingewiesen, dass die Steuerungsvorrichtung 37 vorzugsweise aus einem programmierbarem Universalrechner besteht, der durch besondere Schnittstellen mit den einzelnen Anlagenteilen durch geeignete Steuerungstechnik und Messaufnehmer zur Rückmeldung von Ist- und zum Vergleich mit Sollwerten die Aufgaben der Steuerung und Regelung abwechselnd oder gleichzeitig durchführen muss, insbesondere abhängig mit welchem Anlagenteil der Steuer- oder Regelungsstrang verbunden ist. Zur Darstellung der Steuerung der bevorzugten Regelungsgröße, der Transportstrecke X, ist diese nur mit einem einfachen Pfeil mit der Eindickvorrichtung 25 verbunden, was nicht ausschließt, dass über Sensoren Rückmeldungen über den Zustand und entsprechende Regelungen zur genauen Einstellung der Transportstrecke X vorhanden sind oder notwendig erachtet werden. In der schematischen Darstellung erkennt man auch den Zusammenhang der Produktionsvorrichtung 38 für die Harzmatten 10, die aus der Mischvorrichtung 1 und der Walz- und Tränkvorrichtung 14 besteht, wobei die Harzmatte 10 vorzugsweise übergangslos in die Eindickvorrichtung 25 zur veränderlichen Transportstrecke X überführt, dort gereift und anschließend an die Übergabevorrichtung 19 zum Transport der erstellten Zuschnittmatte 18 in die entsprechende Formpresse 20, 20', 20" ... übergeben wird.

**Bezugszeichenliste 1395:**

| | | | |
|---|---|---|---|
| 1. | Mischvorrichtung | 23. | Austrittspunkt |
| 2. | Band unten | 24. | Heizvorrichtung |
| 3. | Band oben | 25. | Eindickvorrichtung |
| 4. | Unteres Rakel | 26. | Stellvorrichtung |
| 5. | Harzansatzschicht | 27. | Stellvorrichtung |
| 6. | Fasern | 28. | Bandtablett |
| 7. | Oberes Rakel | 29. | Stellvorrichtung |
| 8. | Harzansatzschicht | 30. | Umlenkrollen |
| 9. | Harzansatz | 31. | Abzugswalzenpaar |
| 10. | Harzmatte | 32. | Eintrittspunkt |
| 11. | Walzen, unten | 33. | Stellvorrichtung |
| 12. | | 34. | Antriebswalzen |
| 13. | Walzen, oben | 35. | Stütztisch |
| 14. | Walk- und Tränkvorrichtung | 36. | Folienaufwicklung |
| 15. | Folienabzug | 37. | Steuervorrichtung |
| 16. | Messerleiste | 38. | Produktionsvorrichtung für 10 |
| 17. | Schneidwerk | | |
| 18. | Zuschnittmatte | A | Harzansatzaufbringstrecke |
| 19. | Übergabevorrichtung | B | Walk- und Tränkstrecke |
| 20. | Formpresse | C | Eindickstrecke |
| 21. | Formteil | W | Wärmeeinbringstrecke |
| 22. | Umlenkrolle | X | Transportstrecke (Figur 7) |

## Patentansprüche

1. Anlage zur kontinuierlichen Herstellung von faserverstärkten Harzmatten (10) im Zuge der Herstellung von faserverstärkten Formteilen (SMC) mittels Fließpressen in einer Formpresse (20),
- wobei in abfolgender Anordnung
- eine Produktionsvorrichtung (38) zur Herstellung von Harzmatten (10), bestehend
- aus einer Mischvorrichtung (1) zur Zusammenführung von zumindest einem Harzansatz (9) mit Fasern (6) und
- einer Walk- und Tränkvorrichtung (14) zur Vermischung der Fasern (6) mit dem Harzansatz (9) zu einer Harzmatte (10);
- eine Eindickvorrichtung (25) zur Reifung der Harzmatte (10);
- ein Schneidwerk (17) zur Ablängung der Harzmatte (10) zu einer Zuschnittmatte (18); und
- eine Übergabevorrichtung (19) zur nachfolgenden Übergabe zumindest einer Zuschnittmatte (18) in die Formpresse (20);
angeordnet sind;
- wobei in der Eindickvorrichtung (25) eine Transportstrecke (X) zwischen dem Eintrittspunkt (32) der Harzmatte (10) in die Eindickvorrichtung (25) und einem Austrittspunkt (23) der Harzmatte (10) aus der Eindickvorrichtung (25) angeordnet ist;
- wobei zur Veränderung der Transportstrecke (X) zwischen dem Eintrittspunkt (32) und dem Austrittspunkt (23) zumindest eine Stellvorrichtung (26, 27, 29, 33) im Wesentlichen innerhalb der Eindickvorrichtung (25) angeordnet ist;
- und wobei zumindest in Teilen der Transportstrecke (X) zumindest zwei Umlenkrollen (30) angeordnet sind und zumindest eine Umlenkrolle (30) mittels einer Stellvorrichtung (26) von der zweiten Umlenkrolle (30) in ihrem Abstand zueinander veränderbar angeordnet ist;
**dadurch gekennzeichnet,**
- **dass** zumindest in Teilen der Transportstrecke (X) zumindest ein endlos umlaufendes Band (2 und/oder 3) angeordnet ist und dass zur Veränderung der Transportstrecke (X) zumindest eine Stellvorrichtung (26) mit einer korrespondierenden Stellvorrichtung (26') angeordnet ist; und/oder
- **dass** zumindest in Teilen der Transportstrecke (X) zumindest ein in seiner Länge durch eine Stellvorrichtung (29) und/oder in seiner Lage durch eine Stellvorrichtung (33) veränderliches Bandtablett (28) angeordnet ist; und/oder
- **dass** zumindest in Teilen der Transportstrecke (X) ein in seiner Länge und/oder in seiner Lage durch eine Stellvorrichtung veränderlicher Stütztisch (35) angeordnet ist.

2. Anlage nach Anspruch 1, **dadurch gekenntzeichnet**, dass Folien und/oder endlose Bänder (2, 3) vorgesehen sind, mit welchen die Harzmatte (10) über Umlenkrollen (22, 30) durch die Anlage geführt ist.

3. Anlage nach Anspruch 1 oder 2, **dadurch gekennzeichnet, dass** eine geformte Harzmatte (10) stets an den Folien und/oder Bändern (2, 3) anliegend durch die Eindickvorrichtung (25) geführt ist.

4. Anlage nach einem der vorherigen Ansprüche, **dadurch gekennzeichnet, dass** zumindest eine zusätzliche Stellvorrichtung (26', 26") außerhalb der Eindickvorrichtung (25) angeordnet ist, welche die Bänder (2, 3) weiterhin in einem gespanntem Zustand in der Anlage halten.

5. Anlage nach einem oder mehreren der vorhergehenden Ansprüche,
**dadurch gekennzeichnet, dass** zwischen der Walk-und Tränkvorrichtung (14) und dem Austrittspunkt (23) zumindest eine Heizvorrichtung (24), vorzugsweise eine Mikrowellenvorrichtung, angeordnet ist, und insbesondere vorzugsweise die Heizvorrichtung (24) in Produktionsrichtung vor der Eintrittspunkt (23) und/oder in der Eindickvorrichtung (25) angeordnet ist.

6. Anlage nach einem der vorherigen Ansprüche, **dadurch gekennzeichnet, dass** der Stütztisch (35) mittels geeigneter Stellvorrichtungen teleskopierbar und/oder klappbar und/oder bewegbar ausgebildet ist und vorzugsweise eine reibungsarme Oberfläche auf Seite der Folien respektive der Harzmatte (10) aufweist.

7. Anlage nach einem der vorherigen Ansprüche, **dadurch gekennzeichnet, dass** ein Abzugswalzenpaar (31) vorgesehen ist, dass die Harzmatte (10) in der Eindickvorrichtung (25) unter Spannung hält und gleichzeitig eine Folienaufwicklung (36) unterstützt.

8. Anlage nach einem der vorherigen Ansprüche, **dadurch gekennzeichnet, dass** Stütztische (35) und/oder Umlenkrollen (30) beheizt ausgeführt sind.

9. Anlage nach einem der vorherigen Ansprüche, **dadurch gekennzeichnet, dass** die Umlenkrollen (30) angetrieben oder als Antriebswalzen (34) ausgebildet sind.

10. Anlage nach einem der vorherigen Ansprüche, **dadurch gekennzeichnet, dass** eine Stellvorrichtung (27) vorgesehen ist, mittels welcher eine Übergabevorrichtung der Harzmatte (10) in die Eindickvorrichtung (25) bewegbar ist.

11. Verfahren zum Betreiben einer Anlage nach einem der vorherigen Ansprüche zur kontinuierlichen Herstellung von faserverstärkten Harzmatten (10) im Zuge der Herstellung von faserverstärkten Formteilen (SMC) mittels Fließpressen in einer Formpresse (20), wobei in einer Produktionsvorrichtung (38) für Harzmatten (10) zumindest ein Harzansatz (9) mit Fasern (6) in einer Mischstrecke (A) zusammengeführt werden und anschließend in einer Walk- und Tränkstrecke (B) zu einer Harzmatte (10) vermischt werden und die Harzmatte (10) nachfolgend über eine Transportstrecke (X) durch eine Eindickvorrichtung (25) transportiert und dabei im Wesentlichen gereift wird, und nach dem Austritt aus der Eindickstrecke die endlose Harzmatte (10) zu Zuschnittmatten (18) mittels eines Schneidwerks (17) geschnitten und zumindest eine Zuschnittmatte (18) mittels einer Übergabevorrichtung (19) in zumindest eine Formpresse (20) übergeben wird und in der Formpresse (20) zu einem Formteil (21) verpresst wird,
**dadurch gekennzeichnet, dass**
mittels zumindest einer Steuerungsvorrichtung (37), die mit
- zumindest einer Formpresse (20),
- zumindest einer Übergabevorrichtung (19),
- einer Eindickvorrichtung (25) und
- einer Produktionsvorrichtung (38) zur Erstellung einer endlosen Harzmatten (10)
steuerungs- und/oder regelungstechnisch wirkverbunden ist,
die Austragsmenge der Harzmatten (10) an den notwendigen Bedarf der Formpresse (20, 20', 20"...) angepasst wird.

12. Verfahren nach Anspruch 11, **dadurch gekennzeichnet, dass** zur Anpassung der Austragsmenge der Harzmatten (10) die Länge der Transportstrecke (X) in der Eindickvorrichtung (25) und/oder die Produktionsgeschwindigkeit an den notwendigen Bedarf angepasst und verändert wird.

13. Verfahren nach Anspruch 11 oder 12, **dadurch gekennzeichnet, dass** zur Anpassung der Austragsmenge an Harzmatten (10) aus der Eindickvorrichtung (25) die einzubringende Wärmeenergie durch die Heizvorrichtung (24) an die Länge der Transportstrecke (X) angepasst wird.

14. Verfahren nach einem der Ansprüche 11 bis 13, **dadurch gekennzeichnet, dass** zur Sicherstellung der Versorgung mit Harzansatz (9) zur Aufrakelung auf Folien oder Förderbänder dieser entweder in entsprechender Menge angeliefert wird oder vor Ort mit geeigneten Herstellungsvorrichtungen produziert wird.

15. Verwendung einer Anlage nach einem der Ansprüche 1 bis 10 und/oder eines Verfahrens nach einem der Ansprüche 11 bis 14 in einem Verbund mit mehreren Formpressen (20, 20', 20", ...) oder unterschiedlichen Werkzeugen oder hochreaktiven Harzansätzen.

## Claims

1. An installation for the continuous production of fibre-reinforced resin mats (10) during the production fibre-reinforced moulded parts (SMC) by means of flow moulding in a moulding press (20),
- wherein in successive arrangement there are arranged
- a production apparatus (38) for producing resin mats (10), consisting of
- a mixing apparatus (1) for bringing together at least one resin formulation (9) with fibres (6),
- a milling and impregnation apparatus (14) for mixing the fibres (6) with the resin formulation (9) to form a resin mat (10);
- a thickening device (25) for maturing the resin mat (10);
- a cutting mechanism (17) for cutting the resin mat (10) to length to form a tailored mat (18); and
- a transfer apparatus (19) for the subsequent transfer of at least one tailored mat (18) into the moulding press (20);
- wherein a transport route (X) is arranged in the thickening apparatus (25) between the entry point (32) of the resin mat (10) into the thickening apparatus (25) and an exit point (23) of the resin mat (10) from the thickening apparatus (25);
- wherein, to vary the transport route (X) between the entry point (32) and the exit point (23), at least one adjusting apparatus (26, 27, 29, 33) is substantially arranged within the thickening apparatus (25);
- and wherein, at least in parts of the transport route (X), at least two deflection rollers (30) are arranged, and at least one deflection roller (30) is arranged so that it is variable in its distance from the second deflection roller (30) by means of an adjusting apparatus (26);
**characterized in that**
- at least one endless revolving belt (2 and/or 3) is arranged at least in parts of the transport route (X), and that for changing the transport route (X) at least one adjusting apparatus (26) is arranged with a corresponding adjusting apparatus (26'); and/or that
- in at least parts of the transport route (X) at least one belt tray (28) is arranged, which is variable in its length by an adjusting apparatus (29) and/or in its position by an adjusting apparatus (33); and/or that
- at least in parts of the transport route (X) a support table (35) is arranged, which is variable in its length and/or in its position by an adjusting apparatus.

2. An installation according to claim 1, **characterized in that** films and/or endless belts (2, 3) are provided, with which the resin mat (10) is guided via deflection rollers (22, 30) through the installation.

3. An installation according to claim 1 or 2, **characterized in that** a formed resin mat (10) is always guided through the thickening apparatus (25) by resting on the films and/or belts (2, 3).

4. An installation according to one of the preceding claims, **characterized in that** at least one additional adjusting apparatus (26', 26") is arranged outside of the thickening apparatus (25), which continue to hold the belts (2, 3) in a tensioned state in the installation.

5. An installation according to one or several of the preceding claims, **characterized in that** at least one heating apparatus (24), preferably a microwave apparatus, is arranged between the milling and impregnation apparatus (14) and the exit point (23), and the heating apparatus (24) is especially preferably arranged in the production direction before the entry point (23) and/or in the thickening apparatus (25).

6. An installation according to one of the preceding claims, **characterized in that** the support table (35) is formed to be telescoping and/or foldable and/or movable by means of suitable adjusting apparatuses, and it preferably comprises a low-friction surface on the side of the films or the resin mat (10).

7. An installation according to one of the preceding claims, **characterized in that** a pair of draw-off rollers (31) is provided, which keeps the resin mat (10) under tension in the thickening apparatus (25) and simultaneously supports film winding (36).

8. An installation according to one of the preceding claims, **characterized in that** the support tables (35) and/or deflection rollers (30) are formed to be heatable.

9. An installation according to one of the preceding claims, **characterized in that** the deflection rollers (30) are driven or formed as drive rollers (34).

10. An installation according to one of the preceding claims, **characterized in that** an adjusting apparatus (27) is provided, by means of which a transfer apparatus of the resin mat (10) can be moved into the thickening apparatus (25).

11. A method for operating an installation according to one of the preceding claims for the continuous production of fibre-reinforced resin mats (10) in the course of the production of fibre-reinforced moulded parts (SMC) by means of flow moulding in a moulding press (20), wherein, in a production apparatus (38) for resin mats (10), at least one resin formulation (9) is brought together with fibres (6) in a mixing section (A), and are subsequently mixed in a milling and impregnation section (B) to form a resin mat (10), and the resin mat (10) is subsequently transported via a transport route (X) through a thickening apparatus (25) and is substantially matured thereby, and after the exit from the thickening section the endless resin mat (10) is cut to form tailored mats (18) by means of a cutting mechanism (17), and at least one tailored mat (18) is transferred by means of a transfer apparatus (19) into at least one moulding press (20), and is compressed in the moulding press (20) to form a moulded part (21), **characterized in that**
the output quantity of the resin mats (10) is adapted to the required demand of the moulding press (20, 20', 20" ...) by means of at least one control apparatus (37) which is operatively connected in terms of control and/or regulation to
- at least one moulding press (20),
- at least one transfer apparatus (19),
- a thickening apparatus (25), and
- a production apparatus (38) for producing an endless resin mat (10).

12. A method according to claim 11, **characterized in that** for adapting the output quantity of the resin mats (10) the length of the transport section (X) in the thickening apparatus (25) and/or the production speed is adjusted and changed to the required demand.

13. A method according to claim 11 or 12, **characterized in that** for adapting the output quantity of the resin mats (10) from the thickening apparatus (25) the thermal energy to be introduced by the heating apparatus (24) is adapted to the length of the transport section (X).

14. A method according to one of the claims 11 to 13, **characterized in that** for ensuring the supply with resin formulation (9) for doctoring on films or conveyor belts, said formulation is either supplied in adequate quantity or is produced on site with suitable production apparatuses.

15. The use of an installation according to one of the claims 1 to 10 and/or a method according to one of the claims 11 to 14 in an assembly with several moulding presses (20, 20', 20" ...) or different tools or highly reactive resin formulations.

## Revendications

1. Installation pour la fabrication en continu de nappes de résine (10) armées de fibres au cours de la fabrication de pièces moulées armées de fibres (SMC) par formage par fluage dans une presse de formage (20),
- dans laquelle sont disposés successivement
- un dispositif de production (38) pour la fabrication de nappes de résine (10), composé
- d'un dispositif de mélange (1) destiné à réunir au moins un mélange de résine (9) avec des fibres (6) et
- d'un dispositif de foulage et d'imprégnation (14) pour mélanger les fibres (6) avec le mélange de résine (9) afin d'obtenir une nappe de résine (10) ;
- un dispositif d'épaississement (25) pour la maturation de la nappe de résine (10) ;
- un poste de découpe (17) pour recouper la nappe de résine (10) et produire une nappe découpée (18) ;
- un dispositif de transfert (19) pour déposer ensuite au moins une nappe découpée (18) dans la presse de formage (20),
- dans lequel un trajet de transport (X) entre le point d'entrée (32) de la nappe de résine (10) dans le dispositif d'épaississement (25) et un point de sortie (23) de la nappe de résine (10) hors du dispositif d'épaississement (25) est disposé dans le dispositif d'épaississement (25) ;
- dans lequel, pour modifier le trajet de transport (X) entre le point d'entrée (32) et le point de sortie (23), au moins un dispositif d'ajustement (26, 27, 29, 33) est disposé pour l'essentiel à l'intérieur du dispositif d'épaississement (25) ;
- et dans lequel deux rouleaux de renvoi (30) sont prévus au moins dans des parties du trajet de transport (X) et au moins un rouleau de renvoi (30) est disposé de telle façon que sa distance par rapport au deuxième rouleau de renvoi (30) puisse être modifiée au moyen d'un dispositif d'ajustement (26) ;
**caractérisée en ce que**
- au moins une bande tournant sans fin (2 et/ou 3) est disposée au moins dans des parties du trajet de transport (X) et au moins un dispositif d'ajustement (26) est disposé avec un dispositif d'ajustement correspondant (26') pour modifier le trajet de transport (X) ; et/ou
- **en ce qu'**au moins un plateau à bande (28) dont la longueur peut être modifiée par un dispositif d'ajustement (29) et/ou la position par un dispositif d'ajustement (33) est disposé au moins dans des parties du trajet de transport (X) ; et/ou
- un plateau d'appui (35) dont la longueur et/ou la position peuvent être modifiées par un dispositif d'ajustement est disposé au moins dans des parties du trajet de transport (X).

2. Installation selon la revendication 1, **caractérisée en ce que** sont prévus des films et/ou des bandes sans fin (2, 3) avec lesquels la nappe de résine (10) est guidée à travers l'installation en passant sur des galets de renvoi (22, 30).

3. Installation selon la revendication 1 ou 2, **caractérisée en ce qu'**une nappe de résine (10) formée est guidée à travers le dispositif d'épaississement (25) en reposant toujours sur les films et/ou les bandes (2, 3).

4. Installation selon l'une des revendications précédentes, **caractérisée en ce qu'**au moins un dispositif d'ajustement supplémentaire (26', 26") est disposé à l'extérieur du dispositif d'épaississement (25) et continue à tenir les bandes (2, 3) tendues à l'intérieur de l'installation.

5. Installation selon l'une des revendications précédentes, **caractérisée en ce qu'**il est prévu entre le dispositif de foulage et d'imprégnation (14) et le point de sortie (23) au moins un dispositif de chauffage (24), de préférence un dispositif à micro-ondes, et en particulier le dispositif de chauffage (24) est disposé avant le point d'entrée (23) dans le sens de production et/ou dans le dispositif d'épaississement (25).

6. Installation selon l'une des revendications précédentes, **caractérisée en ce que** le plateau d'appui (35) est télescopique et/ou peut être rabattu et/ou déplacé au moyen de dispositifs d'ajustements appropriés et présente de préférence une surface limitant le frottement du côté des films ou de la nappe de résine (10).

7. Installation selon l'une des revendications précédentes, **caractérisée en ce qu'**il est prévu une paire de rouleaux de traction (31) qui garde la nappe de résine (10) tendue dans le dispositif d'épaississement (25) et supporte en même temps un enroulement du film (36).

8. Installation selon l'une des revendications précédentes, **caractérisée en ce que** les plateaux d'appui (35) et/ou les galets de renvoi (30) sont chauffés.

9. Installation selon l'une des revendications précédentes, **caractérisée en ce que** les galets de renvoi (30) sont entraînés ou conçus comme des rouleaux d'entraînement (34).

10. Installation selon l'une des revendications précédentes, **caractérisée en ce qu'**il est prévu un dispositif d'ajustement (27) au moyen duquel un dispositif de transfert de la nappe de résine (10) peut être déplacé dans le dispositif d'épaississement (25).

11. Procédé pour faire fonctionner une installation selon l'une des revendications précédentes pour la fabrication en continu de nappes de résine (10) armées de fibres au cours de la fabrication de pièces moulées armées de fibres (SMC) par formage par fluage dans une presse de formage (20), dans lequel, dans un dispositif de production (38) de nappes de résine (10), au moins un mélange de résine (9) est réuni avec des fibres (6) dans un trajet de mélange (A) puis mélangé à celles-ci dans un trajet de foulage et d'imprégnation (B) pour former une nappe de résine (10) et la nappe de résine (10) est ensuite transportée sur un trajet de transport (X) à travers un dispositif d'épaississement (25) et maturée pendant ce temps, et après la sortie du trajet d'épaississement, la nappe de résine (10) sans fin est coupée pour obtenir des nappes découpées (18) au moyen d'un poste de découpe (17) et au moins une nappe découpée (18) est transférée au moyen d'un dispositif de transfert (19) dans au moins une presse de formage (20) et pressée dans la presse de formage (20) pour obtenir une pièce mise en forme (21),
**caractérisé en ce que** le débit de sortie des nappes de résine (10) est adapté aux besoins de la presse de formage (20, 20', 20"...) au moyen d'une unité de commande (37) qui est en liaison active aux fins de commande et de régulation avec
- au moins une presse de formage (20),
- au moins un dispositif de transfert (19),
- un dispositif d'épaississement (25) et
- un dispositif de production (38) pour la réalisation d'une nappe de résine (10) sans fin.

12. Procédé selon la revendication 11, **caractérisé en ce qu'**afin d'adapter le débit de sortie des nappes de résine (10), la longueur du trajet de transport (X) dans le dispositif d'épaississement (25) et/ou la vitesse de production sont adaptées aux besoins effectifs et modifiées.

13. Procédé selon la revendication 11 ou 12, **caractérisé en ce qu'**afin d'adapter le débit de sortie des nappes de résine (10) sortant du dispositif d'épaississement (25), l'énergie thermique à transmettre par le dispositif de chauffage (24) est adaptée à la longueur du trajet de transport (X).

14. Procédé selon l'une des revendications 11 à 13, **caractérisé en ce qu'**afin d'assurer l'alimentation en mélange de résine (9) à appliquer à la raclette sur les films ou les bandes de transport, celle-ci est livrée en quantité correspondante ou produite sur place avec des dispositifs de fabrication appropriés.

15. Utilisation d'une installation selon l'une des revendications 1 à 10 et/ou d'un procédé selon l'une des revendications 11 à 14 en combinaison avec plusieurs presses de formage (20, 20', 20"...) ou différents outils ou des mélanges de résine hautement réactifs.
